# EUROPÄISCHE PATENTSCHRIFT

(11) **EP 0 967 136 B1**
(45) Veröffentlichungstag und Bekanntmachung des Hinweises auf die Patenterteilung: **03.07.2002**
(21) Anmeldenummer: 99115746.2
(22) Anmeldetag: 15.01.1996
(51) Int. Cl.: B62D 25/06, B60R 13/02, B60J 3/02, B60N 3/02

(54) **Kraftfahrzeugdach mit zumindest einem daran befestigten Dachanbauteil sowie Montagevorrichtung für Dachanbauteile**
Roof of a motor vehicle with at least one accessory fixed thereon and mounting system for accessories
Toit d'un véhicule automobile avec au moins un accessoire fixé et système de montage pour accessoires

(30) Priorität: 18.01.1995 DE 19501357
(43) Veröffentlichungstag der Anmeldung: 29.12.1999
(62) Teilanmeldung aus: 96100481.9
(73) Patentinhaber: ADAM OPEL AG, 65423 Rüsselsheim (DE)
(72) Erfinder: Plegge, Wolfgang, Dipl.-Ing., 65428 Rüsselsheim (DE); Loitz, Joachim-Günther, 55232 Alzey (DE)
(74) Vertreter: Kümpfel, Heinz, Dipl.-Ing.

(56) Entgegenhaltungen:
- EP-A- 0 018 851
- EP-A- 0 097 219
- DE-U- 7 927 468
- FR-A- 2 571 103
- GB-A- 1 468 954
- GB-A- 2 023 077
- US-A- 4 404 709

## Beschreibung

Die Erfindung betrifft ein Kraftfahrzeugdach mit zumindest einem daran befestigten, als Haltegriff ausgebildeten Dachanbauteil, welches einen Rastkörper zum Verrasten mit einer Rastausnehmung in einem Karosserieblech des Kraftfahrzeugdaches aufweist. Weiterhin betrifft die Erfindung eine Montagevorrichtung für Dachanbauteile.

Ein als Lagerbock für eine Sonnenblende eines Kraftfahrzeugs ausgebildetes Dachanbauteil mit den vorstehenden Merkmalen ist in dem DE-U-79 27 468 beschrieben. Dieser vorbekannte Lagerbock erfordert eine im Durchmesser relativ große Rastausnehmung im Fahrzeugdach, in welches der Lagerbock, welcher üblicherweise aus Kunststoff im Spritzgießverfahren hergestellt wird, mit einem zylindrischen Gehäusebereich einzurasten vermag. Weiterhin müssen die Rastausnehmung und der zylindrische Gehäusebereich eng toleriert sein, damit der Lagerbock zuverlässig im Fahrzeugdach hält. Ein Ausbau des Lagerbocks ist nur dadurch möglich, daß man mit Gewalt an ihm zieht und dabei seine widerhakenartigen, hinter die Rastausnehmung greifenden Rastvorsprünge zerstört. Eine solche Zerstörung, welche jeweils einen Austausch des Dachanbauteils erforderlich macht, kann jedoch aus Wirtschaftlichkeitsgründen heute meist nicht mehr hingenommen werden.

Die GB-A-1 468 954 zeigt auch schon die Befestigung einer Schwenkachse einer Sonnenblende mittels einer Federklammer, welche mit ersten Klemmflächen lösbar mit der Schwenkachse verbunden ist und mit zweiten Klemmflächen in eine Rastausnehmung des Karosseriebleches greift.

Die Montage von Dachanbauteilen erfolgt bislang dadurch, daß im Kraftfahrzeug die Dachanbauteile einzeln am Dach festgeschraubt oder mit ihm verrastet werden. Diese Arbeiten sind sehr zeitaufwendig und erfordern ein Überkopfarbeiten des Monteurs in der Fahrzeugkabine.

Der Erfindung liegt das Problem zugrunde, ein Kraftfahrzeugdach der eingangs genannten Art so auszubilden, daß an ihm angebrachte Dachanbauteile mit hoher Haltekraft befestigbar sind, dennoch aber eine Demontage der Dachanbauteile ohne ihre Zerstörung möglich wird. Weiterhin soll eine Montagevorrichtung zur Montage von Dachanbauteilen geschaffen werden.

Das erstgenannte Problem wird erfindungsgemäß durch die kennzeichnenden Merkmale des Patentanspruches 1 gelöst.

Solche Federklammern haben gegenüber elastisch federnden Kunststoffteilen den Vorteil, eine hohe Haltekraft zu ermöglichen und sich bei starken Zugkräften so verformen zu können, daß es zu einem Ausrasten ohne Zerstörung des Dachanbauteils oder der Federklammer kommt. Durch die horizontale Ausrichtung des Karosseriebleches im Bereich der Rastausnehmung wird eine automatische Zuführung und Montage des Dachanbauteils möglich, da dieses im Kraftfahrzeug lediglich vertikal nach oben bewegt werden muß, bis die Federklammer in die entsprechende Rastausnehmung einrastet.

Da gemäß der Erfindung die Federklammer hinter der Abdeckung angeordnet ist, wird es bei Montage des Dachanbauteils möglich, zunächst die Abdeckung zu entfernen und dann mit einem Werkzeug an der Federklammer zu ziehen. Deshalb kann man zum Herausziehen der Federklammer hohe Kräfte aufbringen, ohne daß die Gefahr einer Zerstörung des Trägers oder anderer Bereiche des Dachanbauteils besteht.

Die Abdeckung ist besonders einfach zu handhaben und kann nicht verlorengehen, wenn sie durch eine mit dem Träger über ein Filmscharnier verbundene Klappe gebildet ist.

Das Filmscharnier ist im fertig montierten Kraftfahrzeug nicht sichtbar, wenn es in einem von einer Dichtlippe einer Türdichtung des Kraftfahrzeugs abgedeckten Bereich des Trägers vorgesehen ist.

Statt beim Ausbau zunächst nach Entfernen der Abdeckung die Federklammer zu demontieren, kann man auch das Dachanbauteil seitlich, quer zur Einsetzrichtung der Federklammer von der Federklammer abziehen, wenn gemäß einer anderen Weiterbildung der Erfindung die ersten Klemmflächen der Federklammer und der Träger zum Aufschieben des Trägers auf die ersten Klemmflächen quer zur Einsetzrichtung des Dachanbauteils mit der Federklammer in die Rastausnehmung des Karosseriebleches ausgebildet sind.

Ein unbeabsichtigtes Abziehen des Dachanbauteils von der Federklammer kann dadurch ausgeschlossen werden, daß zum Fixieren der Federklammer auf dem Dachanbauteil ein von der Fahrzeuginnenseite aus erreichbares Sicherungsteil vorgesehen ist.

Besonders fest ist das Dachanbauteil gegenüber einem Abziehen quer zur Federklammer gesichert, wenn das Sicherungsteil ein in den Träger einsetzbarer, die Federklammer mit dem Träger formschlüssig verbindender Stift ist.

Beim Einschieben des Dachanbauteiles kommt es zwangsläufig zu einem Verrasten, so daß die Sicherung gegen unbeabsichtigtes Herausrutschen nicht vergessen werden kann, wenn gemäß einer anderen Weiterbildung der Erfindung das Sicherungsteil eine an der Federklammer angeformte, bei aufgeschobenem Träger gegen einen Wandbereich des Trägers anliegende Rastzunge ist.

In besonders vorteilhafter Weise kann das erste Befestigungsmittel, welches die Verbindung zwischen dem Dachanbauteil und dem Dachhimmel herstellt, durch einen quer zu seiner Halterichtung verlaufenden Durchbruch in einem prismatisch geformten Federteil in Verbindung mit einem den Durchbruch durchdringenden Riegel gebildet sein, wobei das prismatisch geformte Federteil in einer der prismatischen Form entsprechenden Aufnahme des Dachanbauteiles gehalten und von dem in den Wänden der Aufnahme geführten Riegel fixiert ist.

Eine solche Ausführungsform ergibt sich besonders für die Anordnung eines Haltegriffes am Dachhimmel, da mit ihr relativ große Kräfte übertragbar. sind.

Vorteilhaft kann bei klappbarer Anordnung des Haltegriffes der Riegel als Band eines den Haltegriff tragenden Scharniers ausgeführt sein.

Ein von außen zugänglicher Vorstecker kann zur Sicherung des Riegels vorgesehen werden.

Der Einbau eines Dachanbauteiles und weiterer Dachanbauteile kann gleichzeitig mit der Montage eines Formhimmels erfolgen, wenn gemäß einer für die automatische Montage besonders günstigen Weiterbildung der Erfindung das Dachanbauteil an einem Formhimmel des Kraftfahrzeugdaches vorfixiert und zusammen mit dem Formhimmel am Kraftfahrzeugdach befestigt ist.

Das zweitgenannte Problem, nämlich die Schaffung einer Montagevorrichtung zur Montage von Dachanbauteilen, wird erfindungsgemäß dadurch gelöst, daß sie ein Montagegestell mit Aufnahmen für die zu montierenden Dachanbauteile aufweist und daß das Montagegestell zum Aufsetzen und Fixieren eines Formhimmels auf die in den Aufnahmen gehaltenen Dachanbauteile und zum Einfahren des Formhimmels mit den Dachanbauteilen in das Kraftfahrzeug sowie zum Fixieren der Dachanbauteile mit dem Formhimmel am Kraftfahrzeugdach ausgebildet ist. Eine solche Montagevorrichtung erlaubt die automatische Zuführung und anschließende automatische und gleichzeitige Montage sämtlicher Dachanbauteile.

Der Montagevorgang ist mit besonders geringem Aufwand automatisch durchzuführen, wenn das Montagegestell zum Einfahren durch die Frontscheibenöffnung des Kraftfahrzeugs ausgebildet ist.

Die Erfindung läßt zahlreiche Ausführungsformen zu. Zur weiteren Verdeutlichung ihres Grundprinzips sind mehrere davon in Zeichnungen dargestellt und nachfolgend beschrieben. Die Zeichnungen zeigen in
- Fig. 1: einen schematischen Querschnitt durch einen rechten Randbereich eines Kraftfahrzeugdaches mit einem an ihm befestigten, als Haltegriff ausgebildeten Dachanbauteil,
- Fig. 2: eine räumliche Ansicht des als Haltegriff ausgebildeten Dachanbauteils nach Figur 1,
- Fig. 3: eine räumliche Ansicht einer weiteren Ausführungsform eines als Haltegriff ausgebildeten Dachanbauteils,
- Fig. 4: einen schematischen Querschnitt durch einen rechten Randbereich eines Kraftfahrzeugdaches mit einer weiteren Ausführungsform eines an ihm befestigten, als Haltegriff ausgebildeten Dachanbauteils,
- Fig. 5: einen schematisierten Querschnitt durch einen Randbereich eines Kraftfahrzeugdaches mit einem weiteren als Haltegriff ausgebildeten Dachanbauteil,
- Fig. 6: eine perspektivische Darstellung der Einzelteile des Haltegriffs und seiner Befestigung nach Fig. 5,
- Fig. 7: eine perspektivische Darstellung einer Montagevorrichtung nach der Erfindung.

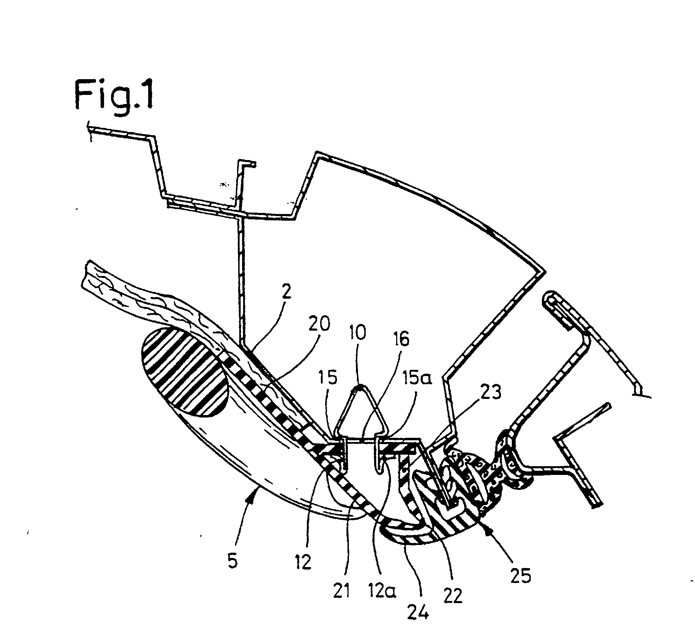

Die Figur 1 zeigt ein als Haltegriff ausgebildetes Dachanbauteil 5. Der Haltegriff ist schwenkbar an einem Träger 20 vorgesehen, welcher durch die Federklammer 10 in der Rastausnehmung 16 des Karosseriebleches 2 gehalten ist. Mit den ersten Klemmflächen 12, 12a greift die Federklammer 10 dabei unter den Träger 20, während die zweiten Klemmflächen 15, 15a wiederum über das Karosserieblech 2 greifen.

Wichtig ist eine Abdeckung 21, welche mittels eines Filmscharniers 22 mit einer senkrechten Wand 23 des Trägers 20 verbunden ist. Dieses Filmscharnier 22 wird von einer Dichtlippe 24 einer Türdichtung 25 abgedeckt.

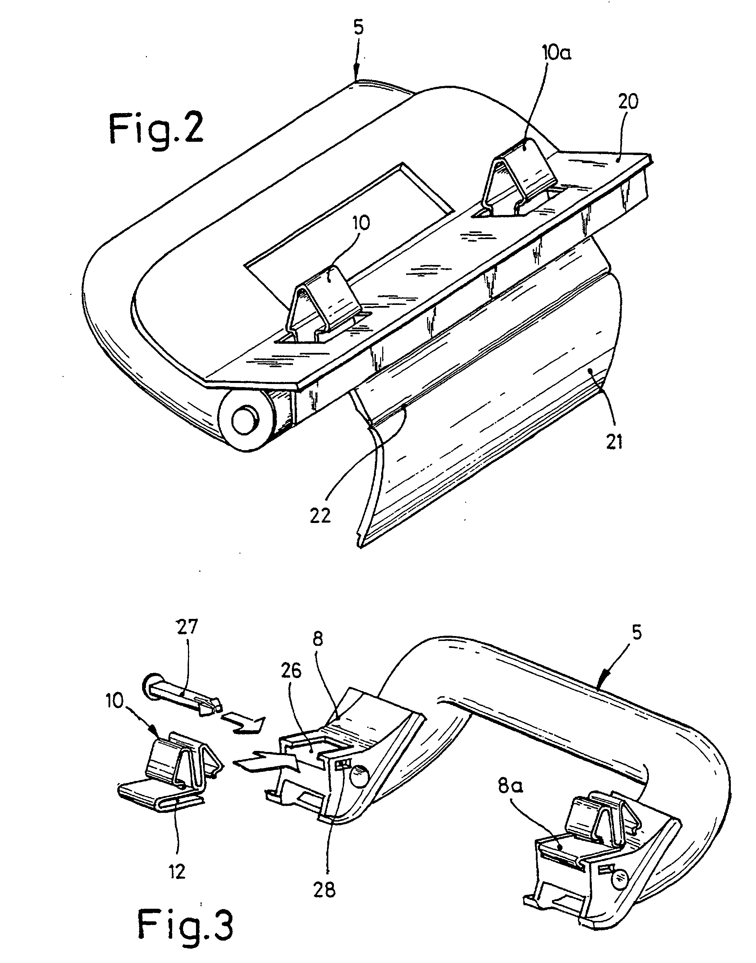

Die Figur 2 zeigt perspektivisch das soeben anhand der Figur 1 beschriebene Dachanbauteil 5 mit dem Träger 20, zwei Federklammern 10, 10a und der Abdeckung 21 in einem die Federklammern 10, 10a noch nicht abdeckenden Zustand. Nach der Montage des Anbauteils wird diese Abdeckung 21 um das Filmscharnier 22 herum verschwenkt, so daß sie die in Figur 2 zu sehende Position einnimmt.

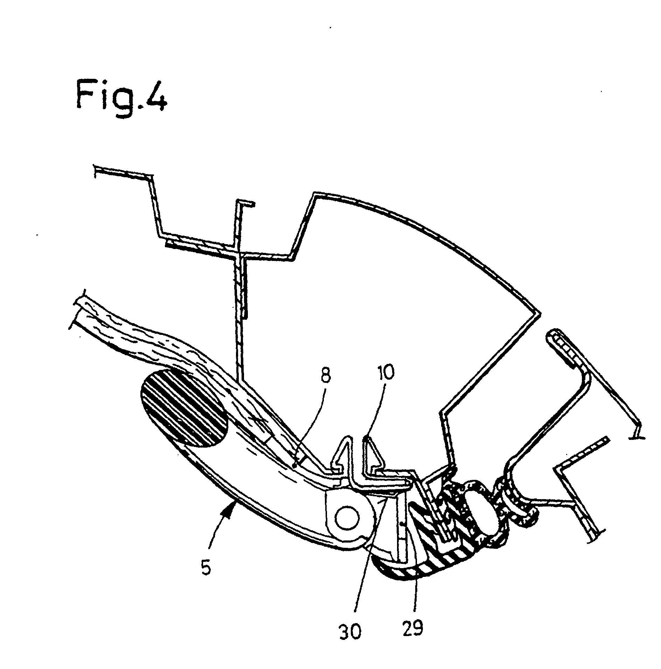

Bei dem Dachanbauteil 5 nach Figur 3 handelt es sich wiederum um einen schwenkbar an Trägern 8, 8a befestigten Haltegriff. Die Träger 8, 8a haben jeweils eine Tasche 26, in welche die bei diesem Ausführungsbeispiel U-förmig ausgebildete erste Klemmfläche 12 der Federklammer 10 eingeschoben werden kann. Danach schiebt man ein als Stift ausgebildetes Sicherungsteil 27 in eine Durchbrechung 28 des Trägers 8. Diese Durchbrechung 28 ist so angeordnet, daß das Sicherungsteil 27 im montierten Zustand zwischen die Schenkel der U-förmig ausgebildeten Klemmfläche 12 durchgreift. Da dieses U in Figur 4 gesehen nach rechts hin geschlossen ist, kann man die Federklammer 10 nicht vom Träger 8 trennen, solange das Sicherungsteil 27 sich in der Durchbrechung 28 befindet.

Zur Montage des Dachanbauteils nach Figur 3 setzt man die beiden Federklammern 10 in die jeweilige Tasche 26 ein und schiebt das dazugehörige Sicherungsteil 27 in die Durchbrechung 28 des Trägers 8. Dann bewegt man die komplette Einheit im Kraftfahrzeug derart, daß die Federklammern in die entsprechenden Rastausnehmungen 16 des Karosserieblechs 2 des Kraftfahrzeugdaches gelangen. Zur Demontage zieht man zunächst die beiden Sicherungsteile 27 aus den Durchbrechungen 28. Danach kann man das Dachanbauteil 5 zur Seite hin von den Federklammern 10 abziehen, die zunächst in den Rastausnehmungen 16 verbleiben.

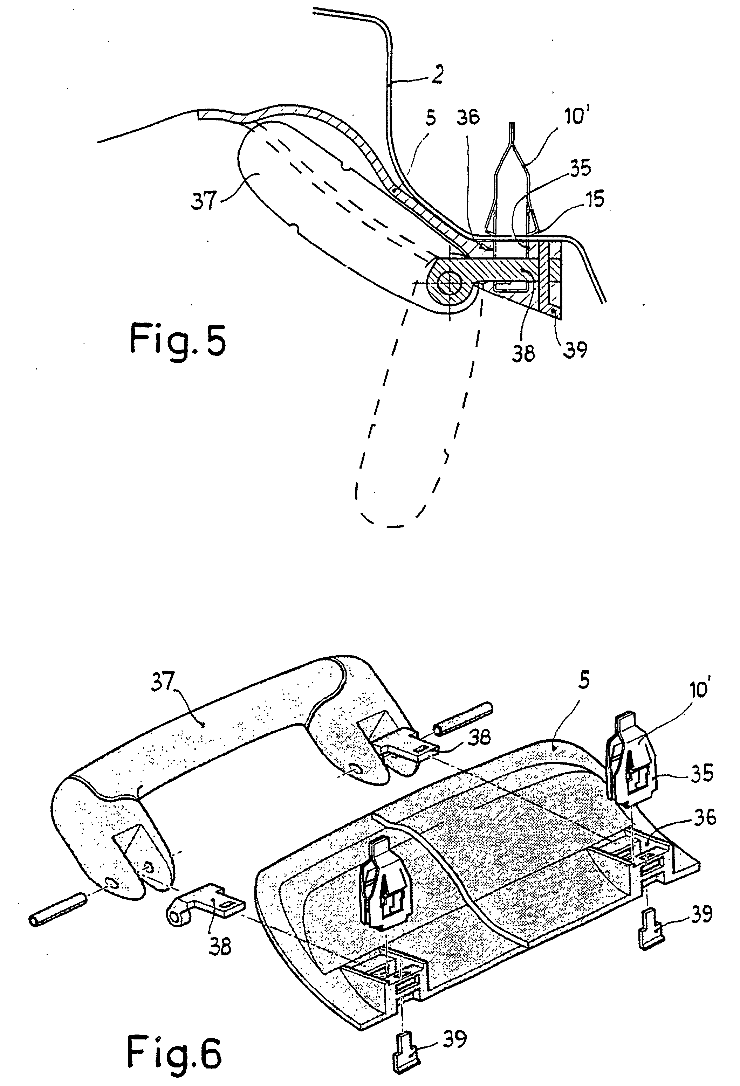

Bei der Ausführungsform nach Figur 4 hat die Federklammer 10 als Sicherungsteil eine Rastzunge 30, welche im montierten Zustand gegen einen senkrechten Wandbereich 29 des Trägers 8 anliegt. Will man den Träger 8 demontieren, muß man mit einem Schraubendreher oder einem Dorn diese Rastzunge 30 hochdrücken. Danach kann man den Träger 8 in Figur 5 gesehen nach links von der Federklammer 10 abziehen, wobei die Federklammer 10 zunächst im Kraftfahrzeugdach verbleibt.

Bei der Ausführungsform nach Figur 5 und 6 ist die Federklammer 10' mit einem annähernd prismatisch geformten Federteil 35 in eine ebenfalls prismatische Aufnahme 36 des Dachanbauteils 5 eingesetzt, welches hier die Halterung für einen Haltegriff 37 darstellt. Die Federklammer 10' wird in der Aufnahme 36 durch einen quer zur Halterichtung der Federklammer 10' verlaufenden Riegel 38 fixiert. Dieser Riegel 38 wird durch das Scharnierband des Scharniers für die Anlenkung der Haltegriffe 37 am Dachanbauteil 5 gebildet. Ein Vorstecker 39, der leicht rastend in einer Öffnung der Wand der Aufnahme 36 sitzt und etwa parallel zur Halterichtung der Federklammer 10' eingeschoben ist, fixiert den Riegel 38.

Bei dieser Ausführungsform kann eine Demontage der Dachanbauteile ohne jede Beschädigungsgefahr erfolgen, indem zuerst die Vorstecker 39 und danach zusammen mit dem Haltegriff 37 die Riegel 38 aus dem Dachanbauteil 5 herausgezogen werden. Danach kann das Dachanbauteil 5 ohne nennenswerten Widerstand nach unten von den Federklammern 10' abgenommen werden. Bei Bedarf können sodann auch die Federklammern 10' aus den Rastausnehmungen 16 des Karosseriebleches 2 entnommen werden, indem die dann zugänglichen Klemmflächen 15 mit einem Werkzeug eingefedert werden.

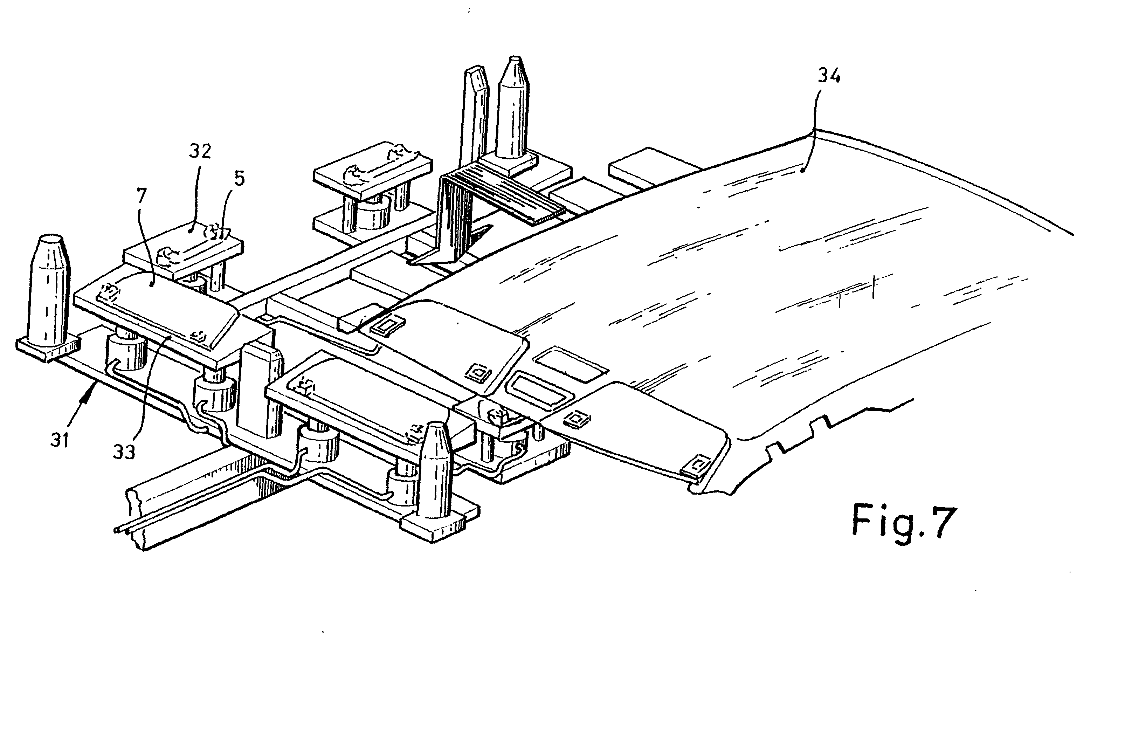

Die Figur 7 zeigt ein Montagegestell 31 mit Aufnahmen 32, 33. In die Aufnahme 32 ist als Dachanbauteil 5 ein Haltegriff eingesetzt, während die Aufnahme 33 eine der Sonnenblenden 7 fixiert. Wie die Figur 5 verdeutlicht, wird nach dem Einsetzen der Dachanbauteile 5, einschließlich der Sonnenblenden 7 und weiterer, möglicherweise ebenfalls zu montierender Dachanbauteile von oben her ein Formhimmel 34 auf die in den Aufnahmen 32, 33 gehaltenen Dachanbauteile 5 gesetzt. Anschließend fixiert man nicht gezeigte Abstandsstücke auf den Formhimmel 34 und fährt dann das Montagegestell 31 mit den genannten Bauteilen durch die Frontscheibenöffnung in das Kraftfahrzeug ein, um die Baueinheit aus Formhimmel 34 und den Anbauteilen 5 durch senkrechtes Verfahren im Kraftfahrzeug fixieren zu können.

## Patentansprüche

1. Kraftfahrzeugdach mit zumindest einem daran befestigten, als Haltegriff ausgebildeten Dachanbauteil (5), welches Rastkörper zum Verrasten mit Rastausnehmungen (16) in einem Karosserieblech (2) des Kraftfahrzeugdaches aufweist, **dadurch gekennzeichnet, daß** das Dachanbauteil (5) einen gegen einen Formhimmel (34) des Kraftfahrzeugdaches anlegbaren Träger (20) hat, in welchem als Rastkörper eine Federklammer (10) mit ersten Klemmflächen (12, 12a) gehalten ist, daß die Federklammer (10) mit zweiten Klemmflächen (15) in der Rastausnehmung (16) verrastet ist und daß die Federklammer (10) zur Innenraumseite des Kraftfahrzeugs hin durch eine Abdeckung (21) des Trägers (20) verdeckt ist.

2. Kraftfahrzeugdach nach Anspruch 1, **dadurch gekennzeichnet, daß** die Abdeckung (21) durch eine mit dem Träger (20) über ein Filmscharnier (22) verbundene Klappe gebildet ist.

3. Kraftfahrzeugdach nach den Ansprüchen 1 oder 2, **dadurch gekennzeichnet, daß** das Filmscharnier (22) in einem von einer Dichtlippe (24) einer Türdichtung (25) des Kraftfahrzeugs abgedeckten Bereich des Trägers (20) vorgesehen ist.

4. Kraftfahrzeugdach nach zumindest einem der vorangehenden Ansprüche, **dadurch gekennzeichnet, daß** die ersten Klemmflächen (12) der Federklammer (10) und der Träger zum Aufschieben des Trägers (20) auf die ersten Klemmflächen (12) quer zur Einsetzrichtung des Dachanbauteils (5) mit der Federklammer (10) in die Rastausnehmung (16) des Karosseriebleches (2) ausgebildet sind.

5. Kraftfahrzeugdach nach Anspruch 4, **dadurch gekennzeichnet, daß** zum Fixieren der Federklammer (10) auf dem Dachanbauteil (5) ein von der Fahrzeuginnenseite aus erreichbares Sicherungsteil (27) vorgesehen ist.

6. Kraftfahrzeugdach nach Anspruch 5, **dadurch gekennzeichnet, daß** das Sicherungsteil (27) ein in den Träger (8) einsetzbarer, die Federklammer (10) mit dem Träger (8) formschlüssig verbindender Stift ist.

7. Kraftfahrzeugdach nach Anspruch 6, **dadurch gekennzeichnet, daß** das Sicherungsteil (27) eine an der Federklammer (10) angeformte, bei aufgeschobenem Träger (8) gegen einen Wandbereich (29) des Trägers (8) anliegende Rastzunge (30) ist.

8. Kraftfahrzeugdach nach Anspruch 1, **dadurch gekennzeichnet, daß** das erste Befestigungsmittel durch einen quer zu seiner Halterichtung verlaufenden Durchbruch in einem prismatisch geformten Federteil in Verbindung mit einem den Durchbruch durchdringenden Riegel gebildet ist, wobei das prismatisch geformte Federteil in einer der prismatischen Form entsprechenden Aufnahme des Dachanbauteiles (5) gehalten und von dem in den Wänden der Aufnahme geführten Riegel fixiert ist.

9. Kraftfahrzeugdach nach Anspruch 8, **dadurch gekennzeichnet, daß** der Riegel als Band eines das Dachanbauteil klappbar haltenden Scharniers ausgeführt ist.

10. Kraftfahrzeugdach nach Anspruch 9, **dadurch gekennzeichnet, daß** der Riegel durch einen von außen zugänglichen Vorstecker gesichert ist.

11. Kraftfahrzeugdach nach zumindest einem der vorangehenden Ansprüche, **dadurch gekennzeichnet, daß** das Dachanbauteil (5) an einem Formhimmel (4) des Kraftfahrzeugdaches vorfixiert und zusammen mit dem Formhimmel (4) am Kraftfahrzeugdach befestigt ist.

12. Montagevorrichtung zur Montage von Dachanbauteilen nach zumindest einem der vorangehenden Ansprüche, **dadurch gekennzeichnet, daß** sie ein Montagegestell (31) mit Aufnahmen (32, 33) für die zu montierenden Dachanbauteile (5, 7) aufweist und daß das Montagegestell (31) zum Aufsetzen und Fixieren eines Formhimmels (34) auf die in den Aufnahmen (32, 33) gehaltenen Dachanbauteile (5, 7) und zum Einfahren des Formhimmels (34) mit den Dachanbauteilen (5, 7) in das Kraftfahrzeug sowie zum Fixieren der Dachanbauteile (5, 7) mit dem Formhimmel (34) am Kraftfahrzeugdach ausgebildet ist.

13. Montagevorrichtung nach Anspruch 13, **dadurch gekennzeichnet, daß** das Montagegestell (31) zum Einfahren durch die Frontscheibenöffnung des Kraftfahrzeugs ausgebildet ist.

## Claims

1. Motor vehicle roof with at least one roof attachment (5) which is fastened thereto and designed as a grab handle and which comprises latch bodies for latching to latch recesses (16) in a body panel (2) of the motor vehicle roof, **characterised in that** the roof attachment (5) has a support (20) which can be applied to a moulded lining (34) of the motor vehicle roof and in which a spring clip (10) is held by first clamping surfaces (12, 12a) as a latch body, **in that** the spring clip (10) is latched by second clamping surfaces (15) in the latch recess (16) and **in that** the spring clip (10) is concealed from the interior side of the motor vehicle by a cover (21) of the support (20).

2. Motor vehicle roof according to claim 1, **characterised in that** the cover (21) is formed by a flap connected to the support (20) by a film hinge (22).

3. Motor vehicle roof according to claim 1 or 2, **characterised in that** the film hinge (22) is provided in a region of the support (20) covered by a sealing lip (24) of a door seal (25) of the motor vehicle.

4. Motor vehicle roof according to one or more of the preceding claims, **characterised in that** the first clamping surfaces (12) of the spring clip (10) and the support are designed for fitting the support (20) over the first clamping surfaces (12) transversely to the direction of insertion of the roof attachment (5) with the spring clip (10) in the latch recess (16) of the body panel (2).

5. Motor vehicle roof according to claim 4, **characterised in that** a locking portion (27) which can be reached from the inside of the vehicle is provided for fixing the spring clip (10) to the roof attachment (5).

6. Motor vehicle roof according to claim 5, **characterised in that** the locking portion (27) is a pin which can be inserted in the support (8) and which connects the spring clip (10) to the support (8) in form-locking relationship.

7. Motor vehicle roof according to claim 6, **characterised in that** the locking portion (27) is a latch tongue (30) which is formed integrally with the spring clip (10) and which abuts against a wall region (29) of the support (8) when the support (8) is fitted on.

8. Motor vehicle roof according to claim 1, **characterised in that** the first fastening means is formed by an aperture running transversely to its holding direction in a prismatically shaped spring portion, in combination with a bolt passing through the aperture, wherein the prismatically shaped spring portion is held in a receptacle of the roof attachment (5) matching the prismatic shape and fixed by the bolt which is guided in the walls of the receptacle.

9. Motor vehicle roof according to claim 8, **characterised in that** the bolt is constructed as a strip of a hinge which holds the roof attachment pivotably.

10. Motor vehicle roof according to claim 9, **characterised in that** the bolt is locked by a detent pin accessible from the outside.

11. Motor vehicle roof according to one or more of the preceding claims, **characterised in that** the roof attachment (5) is pre-fixed to a moulded lining (4) of the motor vehicle roof and fastened together with the moulded lining (4) to the motor vehicle roof.

12. Assembly device for the assembly of roof attachments according to one or more of the preceding claims, **characterised in that** it comprises an assembly frame (31) with receptacles (32, 33) for the roof attachments (5, 7) to be assembled and **in that** the assembly frame (31) is designed for placing and fixing a moulded lining (34) on the roof attachments (5, 7) held in the receptacles (32, 33) and for insertion of the moulded lining (34) with the roof attachments (5, 7) in the motor vehicle as well as for fixing the roof attachments (5, 7) with the moulded lining (34) to the motor vehicle roof.

13. Assembly device according to claim 13, **characterised in that** the assembly frame (31) is designed for insertion through the windscreen opening of the motor vehicle.

## Revendications

1. Toit de véhicule automobile avec, fixé à celui-ci, au moins un accessoire de toit (5) conformé en poignée, qui présente des éléments d'encliquetage destinés à être encliquetés dans des ouvertures d'encliquetage (16) dans une tôle (12) de la carrosserie (2) du véhicule, **caractérisé en ce que** l'accessoire de toit (5) comporte un support (20) applicable contre un ciel préformé (34) du toit du véhicule, dans lequel une agrafe (10) élastique, en tant qu'élément d'encliquetage, est tenue par de premières surfaces de fixation (12, 12a), **en ce que** l'agrafe (10) est encliquetée dans l'ouverture d'encliquetage (16) par de secondes surfaces de fixation (15) et **en ce que** l'agrafe (10), côté habitacle du véhicule, est masquée par un élément de couverture du support (20).

2. Toit de véhicule automobile selon la revendication 1, **caractérisé en ce que** l'élément de couverture (21) est formé d'un volet lié au support (20) par une charnière film (22).

3. Toit de véhicule automobile selon la revendication 1 ou 2, **caractérisé en ce que** la charnière film (22) est prévue dans une partie du support (20) qui est masquée par une lèvre (24) d'un joint de porte (25) du véhicule .

4. Toit de véhicule automobile selon au moins une des revendications précédentes, **caractérisé en ce que** les premières surfaces de fixation (12) de l'agrafe (10) élastique et le support sont conformés pour glisser le support (20) sur les premières surfaces de fixation (12), transversalement à la direction de montage de l'accessoire de toit (5) avec l'agrafe élastique (10) dans l'ouverture d'encliquetage (16) de la tôle de carrosserie (2).

5. Toit de véhicule automobile selon la revendication 4, **caractérisé en ce que** pour tenir l'agrafe élastique (10) sur l'accessoire de toit (5), il est prévu un élément de freinage (27) accessible à partir de l'intérieur du véhicule.

6. Toit de véhicule automobile selon la revendication 5, **caractérisé en ce que** l'élément de freinage (27) est une goupille insérée dans le support (8) qui relie l'agrafe élastique (10) au support (8) par complémentarité de formes.

7. Toit de véhicule automobile selon la revendication 6, **caractérisé en ce que** l'élément de freinage (27) est une languette (30) d'encliquetage aménagée sur l 'agrafe élastique (10), qui s'applique contre une partie de paroi (29) du support (29) lorsque celui-ci est inséré.

8. Toit de véhicule automobile selon la revendication 1, **caractérisé en ce que** le premier élément de fixation est formé d'une ouverture prévue transversalement à la direction de fixation dans un élément élastique en forme de prisme qui coopère avec un moyen de verrouillage traversant l'ouverture, l'élément élastique en forme de prisme étant tenu dans un logement de l'accessoire de toit (5) adapté à la forme prismatique de l'élément élastique et étant bloqué par le moyen de verrouillage traversant dans les parois du logement.

9. Toit de véhicule automobile selon la revendication 8, **caractérisé en ce que** le moyen de verrouillage est conformé en partie d'une charnière rabattable qui retient l'accessoire de toit.

10. Toit de véhicule automobile selon la revendication 9, **caractérisé en ce que** le moyen de verrouillage est freiné par une clavette accessible de l'extérieur.

11. Toit de véhicule automobile selon au moins une des revendications précédentes, **caractérisé en ce que** l'accessoire de toit (5) est préfixé à un ciel préformé (4) du toit du véhicule et est fixé au toit de véhicule en même temps que le ciel de toit (4).

12. Dispositif de montage pour le montage d'accessoires de toit selon au moins une des revendications précédentes, **caractérisé en ce qu'**il comprend un châssis de montage (31) avec des supports (32, 33) pour les accessoires de toit (5, 7) à monter, et **en ce que** le châssis de montage (31) est agencé pour placer et fixer un ciel de toit préformé (34) sur les accessoires de toit (5, 7) reposant sur les supports (32, 33) ainsi que pour amener le ciel de toit (34) avec les accessoires de toit (5, 7) dans le véhicule et fixer lesdits accessoires de toit (5, 7) et ledit ciel de toit (34) au toit du véhicule.

13. Dispositif de montage selon revendication 13, **caractérisé en ce que** le châssis de montage (31) est agencé pour être entré à travers l'ouverture du pare-brise du véhicule.
